# EUROPEAN PATENT APPLICATION

(11) **EP 3 588 874 A1**
(43) Date of publication of application: **01.01.2020**
(21) Application number: 17897895.3
(22) Date of filing: 18.09.2017
(51) Int. Cl.: H04L 12/723

(54) **METHOD AND APPARATUS FOR ADJUSTING BANDWIDTH ACCORDING TO REQUIREMENTS, AND COMPUTER STORAGE MEDIUM**

(30) Priority: 27.02.2017 CN 201710107843
(71) Applicant: ZTE Corporation, Shenzhen, Guangdong 518057 (CN)
(72) Inventor: JIANG, Zhiqiang, Shenzhen Guangdong 518057 (CN)
(74) Representative: Rosenberg, Muriel Sylvie
(86) International application number: PCT/CN2017/102116
(87) International publication number: WO 2018/153071

(57) **Abstract**

Disclosed are a method and device for adjusting bandwidth on demand, and a computer storage medium, the method including: bundling different generalized Label Switched Paths, gLSPs, between user network interface-client devices, UNI-C devices, to a same VTE link between the UNI-C devices; and performing, when there is an additional bandwidth demand for a generalized Label Switched Path in the VTE link, bandwidth expansion on the generalized Label Switched Path or adding for the VTE link a generalized Label Switched Path satisfying the bandwidth demand.

## Description

### CROSS-REFERENCE TO RELATED APPLICATIONS

This application is based on a Chinese patent application No. 201710107843.5, filed on February 27, 2017, and claims the priority thereof, the contents of which are incorporated herein in their entirety by reference.

### TECHNICAL FIELD

The present disclosure relates to a field of network communication technology, and in particular, to a method and device for adjusting bandwidth on demand, and a computer storage medium.

### BACKGROUND

In order to meet a transmission requirement of evolving and developing data services, a transport network needs a capability of supporting multiple services, providing multiple switching technologies and multiple switching granularities, and providing end-to-end Operation Administration and Maintenance (OAM) and a capability of protection and recovery.

The ITU-T organization describes and defines a framework of a multi-layer network, and defines a relationship between adjacent layers in the multi-layer network as a relationship of a client layer and a service layer. In the Requirements for GMPLS-Based Multi-Region and Multi-Layer Networks (RFC5212) promulgated by the IETF, a multi-layer network (MLN) is defined as a Traffic Engineering (TE) domain controlled by a single Generalized Multiprotocol Label Switching (GMPLS) control plane instance and including multiple data switching planes having a same switching capability or different switching capabilities. The multi-layer network mentioned below mainly refers to a multi-layer network consist of data planes with different exchange capabilities.

In the multi-layer network, the service layer network establishes a path between edge nodes of the service layer network according to a demand of the client layer network. After establishment, the path is notified to the client layer network as a TE link, to form a part of the client layer network topology for calculation of the client layer path.

When the client layer has an additional bandwidth demand for the service layer, the service layer would expand bandwidth of an original path. When remaining bandwidth of the original path could not meet the new demand for bandwidth, the service layer would establish a new path to meet the new demand for bandwidth of the client layer. This situation would lead to a change in the client layer topology and affect the service of the client layer.

### SUMMARY

In order to solve the above technical problems, an embodiment of the present disclosure provides a method and device for adjusting bandwidth on demand.

In an aspect, the present disclosure provides a method for adjusting bandwidth on demand, including: bundling different generalized Label Switched Paths, gLSPs, between user network interface-client devices, UNI-C devices, to a same VTE link between the UNI-C devices; and performing, when there is an additional bandwidth demand for a generalized Label Switched Path in the VTE link, bandwidth expansion on the generalized Label Switched Path or adding for the VTE link a generalized Label Switched Path satisfying the bandwidth demand.

In an embodiment, after the bundling the different generalized Label Switched Paths LSPs between the UNI-C devices to the same VTE link between the UNI-C devices, the method further includes: gathering traffic engineering TE information of all of the generalized Label Switched Paths for the VTE link and notifying the gathered TE information to an IP layer, such that the IP layer performs path calculation based on the gathered TE information.

In an embodiment, after the bundling the different generalized Label Switched Paths LSPs between the UNI-C devices to the same VTE link between the UNI-C devices, the method further includes one of: making all of the generalized Label Switched Paths for the VTE link correspond to a same TE link between the UNI-C devices and a user network interface-network device, UNI-N device; making all of the generalized Label Switched Paths for the VTE link correspond to different TE links between the UNI-C devices and the UNI-N device; and making the generalized Label Switched Paths for different VTE links correspond to a same TE link between the UNI-C devices and the UNI-N device.

In an embodiment, before the bundling the different generalized Label Switched Paths LSPs between the UNI-C devices to the same VTE link between the UNI-C devices, the method further includes: verifying whether there is a VTE link between the UNI-C devices, and determining whether the VTE link is able of providing a service; and establishing a VTE link between the UNI-C devices when there is no VTE link or the VTE link is not able of providing a service.

In an embodiment, before the bundling the different generalized Label Switched Paths LSPs between the UNI-C devices to the same VTE link between the UNI-C devices, the method further includes: configuring both ends of the VTE link as LSP bundling interfaces of the UNI-C devices, and configuring a virtual connection between the LSP bundling interfaces of the UNI-C devices as corresponding to the VTE link.

In an embodiment, after adding for the VTE link the generalized Label Switched Path satisfying the bandwidth demand, the method further includes: bundling the added generalized Label Switched Path to the VTE link.

In an embodiment, after bundling the added generalized Label Switched Path to the VTE link, the method further includes: updating TE information of all of the generalized Label Switched Paths for the VTE link and notifying the TE information to the IP layer.

In another aspect, the present disclosure provides a device for adjusting bandwidth on demand, including: an LSP bundling module configured to bundle different generalized Label Switched Paths, gLSPs, between user network interface-client devices, UNI-C devices, to a same VTE link between the UNI-C devices; and a stateful PCE module configured to perform, when there is an additional bandwidth demand for a generalized Label Switched Path in the VTE link, bandwidth expansion on the generalized Label Switched Path or add for the VTE link a generalized Label Switched Path satisfying the bandwidth demand.

In an embodiment, the device further includes: a virtual network topology management VNTM module configured to gather traffic engineering TE information of all of the generalized Label Switched Paths for the VTE link and notify the gathered TE information to an IP layer, such that the IP layer performs path calculation based on the gathered TE information.

In an embodiment, the VNTM module is configured to perform one of: making all of the generalized Label Switched Paths for the VTE link correspond to a same TE link between the UNI-C devices and a user network interface-network device, UNI-N device; making all of the generalized Label Switched Paths for the VTE link correspond to different TE links between the UNI-C devices and the UNI-N device; and making the generalized Label Switched Paths for different VTE links correspond to a same TE link between the UNI-C devices and the UNI-N device.

In an embodiment, the stateful PCE module is further configured to: verify whether there is a VTE link between the UNI-C devices, and determine whether the VTE link is able of providing a service; and establish a VTE link between the UNI-C devices when there is no VTE link or the VTE link is not able of providing a service.

In an embodiment, the stateful PCE module is further configured to: configure both ends of the VTE link as LSP bundling interfaces of the UNI-C devices, and configure a virtual connection between the LSP bundling interfaces of the UNI-C devices as corresponding to the VTE link.

In an embodiment, the stateful PCE module is further configured to notify the LSP bundling module after the generalized Label Switched Path satisfying the bandwidth demand is added for the VTE link; and the LSP bundling module is further configured to bundle the added generalized Label Switched Path to the VTE link.

In an embodiment, the LSP bundling module is further configured to notify the VNTM module after the added generalized Label Switched Path is bundled to the VTE link; and the VNTM module is configured to update TE information of all of the generalized Label Switched Paths for the VTE link and notify the TE information to the IP layer.

In another aspect, the present disclosure further provides a device for adjusting bandwidth on demand, the device includes: a processor and a memory storing computer executable instructions, when implemented by the processor, causing implementation of a method of: bundling different generalized Label Switched Paths, gLSPs, between user network interface-client devices, UNI-C devices, to a same VTE link between the UNI-C devices; and performing, when there is an additional bandwidth demand for a generalized Label Switched Path in the VTE link, bandwidth expansion on the generalized Label Switched Path or adding for the VTE link a generalized Label Switched Path satisfying the bandwidth demand.

In another aspect, the present disclosure further provides a computer storage medium storing thereon computer executable instructions, when performed by a processor, cause the processor to perform the method for adjusting bandwidth on demand according to embodiments of the present disclosure.

According to embodiments of the present disclosure, in the multi-layer network of SDN architecture, when the service layer is required to provide a service demanding additional bandwidth, the network topology of the client layer would not change, and thus a service of the client layer would not be affected; additionally, adjustment to the bandwidth may be of various granularities according to a demand of a user, and is not limited by a bandwidth of a single physical link between UNI-C and UNI-N.

Other features and advantages of the disclosure will be described in the following description, and would become obvious partially from the description, or be understood by implementing the disclosure. Objectives and other advantages of the disclosure may be implemented and obtained by means of structures particularly specified in the Description, Claims and Drawings.

### BRIEF DESCRIPTION OF THE DRAWINGS

The drawings, constituting a part of the specification, provide a further understanding of technical solutions of the present disclosure, and are used to explain technical solutions of the present disclosure together with embodiments of the present disclosure, and do not constitute a limitation of the technical solutions of the present disclosure. In the drawings,
FIG. 1 is a schematic flowchart illustrating a method for adjusting bandwidth according to an embodiment of the present disclosure;
FIG. 2 is a schematic diagram illustrating a hierarchical relationship of a VTE link of a device according to an embodiment of the present disclosure;
FIG. 3 is a schematic diagram illustrating a structure of a device for adjusting bandwidth according to an embodiment of the present disclosure;
FIG. 4 is a schematic diagram illustrating module components of a controller to which a device for adjusting bandwidth on demand belongs according to an embodiment of the present disclosure;
FIG. 5 is a schematic diagram illustrating an example of a multi-layer network architecture; and
FIG. 6 is a schematic diagram illustrating implementation of adjusting bandwidth on-demand in the example of the multi-layer network of FIG. 5 according to an embodiment of the present disclosure.

### DETAILED DESCRIPTION

Embodiments of the present disclosure will be described in detail below with reference to the accompanying drawings, in order to make objects, technical solutions and advantages of the present disclosure more clear. It should be noted that, embodiments and features in the embodiments of the present disclosure may be combined with each other arbitrarily without any conflict.

Steps illustrated in the flowchart of the drawings may be executed in a computer system such as a set of computer executable instructions. Further, although a logical order is shown in the flowcharts, the steps illustrated or described may be performed in a different order than that described herein in some cases.

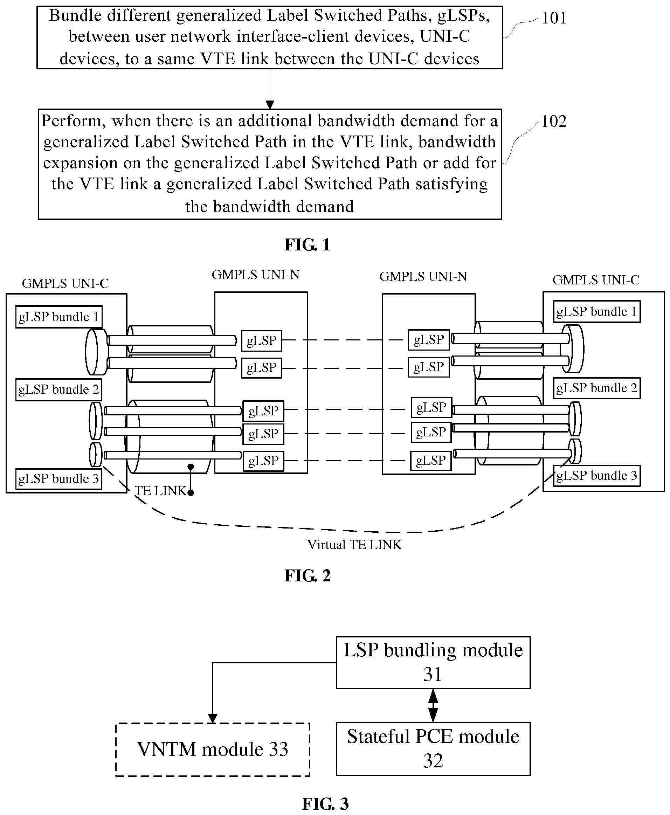

As shown in FIG. 1, the present disclosure provides a method for adjusting bandwidth on demand, including step 101 to step 102.

At step 101, different generalized Label Switched Paths, gLSPs, between user network interface-client devices, UNI-C devices, are bundled to a same VTE link between the UNI-C devices.

At step 102, when there is an additional bandwidth demand for a generalized Label Switched Path in the VTE link, bandwidth expansion is performed on the generalized Label Switched Path or a generalized Label Switched Path satisfying the bandwidth demand is added for the VTE link.

The present disclosure may be applied to a multi-layer network of the SDN architecture to achieve its Bandwidth on Demand (BoD). The present application is based on a technology of VTE Link (Virtual TE Links) mentioned in RFC5212, and is extended on the basis thereof, thus it may adjust bandwidth provided by the service layer flexibly without changing a topology of the client layer, and is not limited by a bandwidth of a single physical link between UNI-C and UNI-N, thereby overcoming a defect that adjustment of the bandwidth provided by the service layer may cause a change in the topology of the client layer in some cases.

In some implementations, after the different generalized Label Switched Paths LSPs between the UNI-C devices are bundled to the same VTE link between the UNI-C devices, traffic engineering TE information of all of the generalized Label Switched Paths for the VTE link is gathered and notified to an IP layer, such that the IP layer performs path calculation based on the gathered TE information.

In actual applications, after the different generalized Label Switched Paths LSPs between the UNI-C devices are bundled to the same VTE link between the UNI-C devices, one of the following may be performed:
1) making all of the generalized Label Switched Paths for the VTE link correspond to a same TE link between the UNI-C devices and a user network interface-network device, UNI-N device;
2) making all of the generalized Label Switched Paths for the VTE link correspond to different TE links between the UNI-C devices and the UNI-N device; and
3) making the generalized Label Switched Paths for different VTE links correspond to a same TE link between the UNI-C devices and the UNI-N device.

In some implementations, before the different generalized Label Switched Paths LSPs between the UNI-C devices being bundled to the same VTE link between the UNI-C devices, whether there is a VTE link between the UNI-C devices is verified, and whether the VTE link is able of providing a service is determined; and a VTE link is established between the UNI-C devices when there is no VTE link or the VTE link is not able of providing a service.

In the present application, before the different generalized Label Switched Paths LSPs between the UNI-C devices being bundled to the same VTE link between the UNI-C devices, both ends of the VTE link are configured as LSP bundling interfaces of the UNI-C devices, and a virtual connection between the LSP bundling interfaces of the UNI-C devices is configured as corresponding to the VTE link.

In some implementations, after the generalized Label Switched Path satisfying the bandwidth demand is added for the VTE link, the added generalized Label Switched Path is bundled to the VTE link. After that, TE information of all of the generalized Label Switched Paths for the VTE link is updated and notified to the IP layer.

The present application extends a concept of VTE Link defined in RFC5212. The VTE Link is no longer just a single LSP for the service layer, and there may be multiple bundled LSP for the service layer.

As shown in FIG. 2, both ends of a VTE link are on a user network interface-client (UNI-C) device and correspond to gLSP bundled logical interfaces on the UNI-C device, and a virtual connection between gLSP bundled interfaces of the UNI-C devices on both ends corresponds to a VTE Link. A VTE link may include one gLSP or multiple gLSPs. The multiple gLSPs for a VTE link may correspond to a same TE link (gLSP bundle 1) or different TE links between the UNI-C and a User Network Interface-Network (UNI-N) device. The gLSPs for different VTE links may go through a same TE link between UNI-C and UNI-N. When there are multiple gLSPs for the VTE link, the TE information notified to the IP layer should take into account all of gLSPs for the VTE link.

In the present disclosure, the method for adjusting bandwidth on demand in a multi-layer network may include the following three steps.

At a first step, a user needs to design the VTE link through an APP, and specify attributes such as which two UNI-C devices to be connected by the VTE link, a desired bandwidth, and delay.

At a second step, the user uses the APP to perform service deployment, and triggers a PCE to perform path calculation for the IP layer. After the path calculation is completed, if the path includes a VTE Link, whether the VTE Link being able of providing a service is to be determined. If a forwarding path of an optical network corresponding to the VTE link is not established, a gLSP bundling module uses the PCE to calculate the path of the service layer according to predetermined constraint, and controls the UNI-C device to complete the establishment of the VTE Link forwarding channel.

At a third step, when there is additional demand for bandwidth of the VTE Link, the demand may come from user planning, or may come from network traffic monitoring and analysis, or bandwidth calendaring. The gLSP bundling module analyzes the new added demand for bandwidth, and may directly perform bandwidth expansion on original gLSP path, or may directly add a gLSP for the VTE link to meet the demand for bandwidth expansion.

In an architecture of the multi-layer network, compared with existing art, when the service layer is required to provide a service demanding additional bandwidth, in the present application, the network topology of the client layer would not change, and thus a service running on the client layer would not be affected.

As shown in FIG. 3, the present disclosure further provides an apparatus for adjusting bandwidth on demand, including a LSP bundling module 31 and a stateful PCE module 32.

The LSP bundling module 31 may be configured to bundle different generalized Label Switched Paths, gLSPs, between user network interface-client devices, UNI-C devices, to a same VTE link between the UNI-C devices.

The stateful PCE module 32 may be configured to perform, when there is an additional bandwidth demand for a generalized Label Switched Path in the VTE link, bandwidth expansion on the generalized Label Switched Path or add for the VTE link a generalized Label Switched Path satisfying the bandwidth demand.

In some implementations, the apparatus for adjusting bandwidth on demand further includes a VNTM module 33 configured to gather traffic engineering TE information of all of the generalized Label Switched Paths for the VTE link and notify the gathered TE information to an IP layer, such that the IP layer performs path calculation based on the gathered TE information.

In actual applications, the VNTM module 33 may be further configured to perform one of: 1) making all o the generalized Label Switched Paths for the VTE link correspond to a same TE link between the UNI-C devices and a user network interface-network device, UNI-N device; 2) making all of the generalized Label Switched Paths for the VTE link correspond to different TE links between the UNI-C devices and the UNI-N device; and 3) making the generalized Label Switched Paths for different VTE links correspond to a same TE link between the UNI-C devices and the UNI-N device.

In some implementations, the stateful PCE module 32 may be further configured to: verify whether there is a VTE link between the UNI-C devices, and determine whether the VTE link is able of providing a service; and establish a VTE link between the UNI-C devices when there is no VTE link or the VTE link is not able of providing a service.

In the present disclosure, the stateful PCE module 32 may be further configured to configure both ends of the VTE link as LSP bundling interfaces of the UNI-C devices, and configure a virtual connection between the LSP bundling interfaces of the UNI-C devices as corresponding to the VTE link.

In some implementations, the stateful PCE module 32 may be further configured to notify the LSP bundling module 31 after the generalized Label Switched Path satisfying the bandwidth demand is added for the VTE link; and the LSP bundling module 31 may be further configured to bundle the added generalized Label Switched Path to the VTE link. The LSP bundling module 31 may be configured to notify the VNTM module after the added generalized Label Switched Path is bundled to the VTE link, and the VNTM module 33 may be further configured to update TE information of all of the generalized Label Switched Paths for the VTE link and notify the TE information to the IP layer.

Accordingly, the present disclosure further provides another device for adjusting bandwidth on demand, including: a processor and a memory storing computer executable instructions, when implemented by the processor, causing implementation of a method of: bundling different generalized Label Switched Paths, gLSPs, between user network interface-client devices, UNI-C devices, to a same VTE link between the UNI-C devices; and performing, when there is an additional bandwidth demand for a generalized Label Switched Path in the VTE link, bandwidth expansion on the generalized Label Switched Path or adding for the VTE link a generalized Label Switched Path satisfying the bandwidth demand.

It should be noted that both of the above two devices for adjusting the bandwidth on demand can implement all the details of the foregoing solutions and all the details of the following specific embodiments.

In actual applications, both of the above two devices for adjusting the bandwidth on demand are arranged in a controller of the SDN architecture, to adjust the bandwidth on demand for the multi-layer network of the SDN structure.

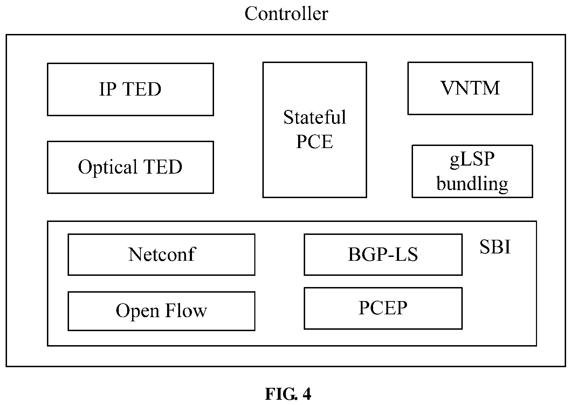

As shown in FIG. 4, the controller of the SDN architecture may include: a stateful Path Compute Element (PCE) module, an IP Traffic Engineering Database (IP TED) module, an Optical TED module, a virtual network topology management (VNTM) module, a Path Compute Element Communication Protocol (PCE) module, a Netconf module, an OpenFlow module, a BGP-LS module and a gLSP bundling module.

The PCE module is used for calculation of generalized Label Switched Path (gLSP) of an IP Network (Client Layer) and Optical Network (Service Layer), and for monitoring and management of LSPs.

The IP TED module is used for maintaining and managing traffic engineering (TE) information of the IP network.

The Optical TED module is used for maintaining and managing the TE information of the optical network.

The VNTM module is used for managing and controlling Label Switched Paths (LSPs) of the service layer, which are notified to the client layer for path calculation for the client layer. The notification includes the TE information required for the path calculation for the client layer.

The PCE module belongs to a south bundled interface of the controller, and is used to interact with the Path Compute Client (PCC) for control information and status information of LSPs of the IP layer and the optical layer.

The Netconf module belongs to a south bundled interface of the controller, and is used to transmit configuration information, request status information, and alarm information to a network device.

The OpenFlow module belongs to a south bundled interface of the controller, and is used to transmit a flow table and control information to a network device.

The BGP-LS module belongs to a south bundled interface of the controller, and is used to gather topology information of the Internet Protocol (IP) network and the optical network, as well as related TE information.

The gLSP bundling module is used to manage a relationship between the VTE link and the gLSP, gather the TE information of the gLSP to a corresponding VTE link, and manage and control a status of the gLSP and the VTE link.

The TE information of the TE link through the optical network, used by the IP layer when performing path calculation using the PCE, is the TE information gathered by the gLSP bundling module, instead of the TE information of the gLSP of the service layer.

An implementation process of adjusting the bandwidth on demand in the present disclosure will be described in detail below with reference to specific embodiments.

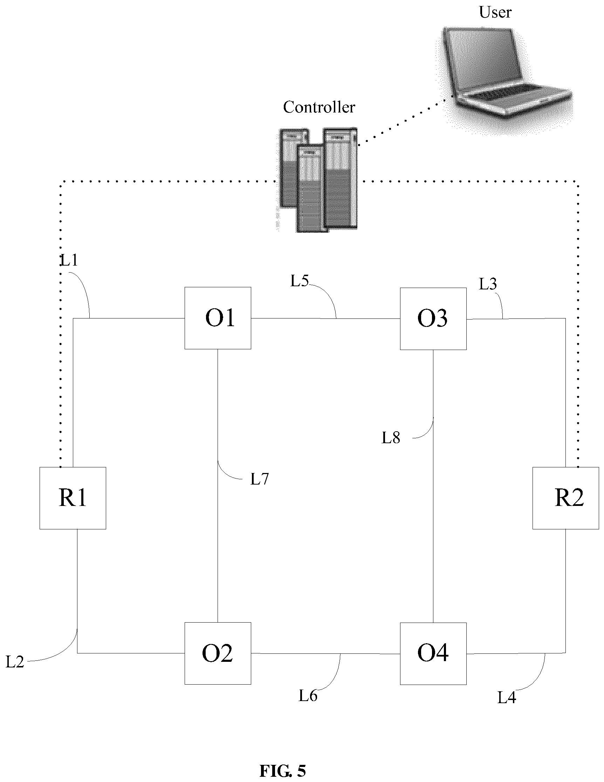

As shown in FIG. 5, an example of a multi-layer network architecture used in the present disclosure includes two routing devices R1, R2, and four optical network devices O1, O2, O3, and O4.

R1 is connected to O1 and O2 through two physical links L1 and L2, respectively. R2 is connected to O3 and O4 through two physical links L3 and L4, respectively. Each of the four physical links L1, L2, L3 and L4 has a 10G bandwidth.

O1 and O3 are connected by physical link L5, and O2 and O4 are connected by physical link L6. O1 and O2 are connected by physical link L7, and O3 and O4 are connected by L8. The bandwidths of the four physical links L5, L6, L7, and L8 are not specifically specified, but the bandwidths meet the bandwidth demands of transmission an IP layer service.

In FIG. 5, only four optical network devices and two IP network devices are included, and devices O1 and O3, O2 and O4 in the optical network are directly connected through physical links. In a practical application, there is no limitation on the number of IP network devices and optical network devices in the present disclosure, and there is no limitation on the connection between optical network devices, that is, O1 and O3 may be directly connected through a physical link, or through multiple optical network devices. There may be a physical link between O1 and O2, or there may be no physical links, which will not affect the implementation of this application.

In the multi-layer network architecture of FIG. 5, a controller is further included for managing and controlling IP network devices and optical network devices. The controller may collect the topology of the IP network and the optical network and information of the TE link at the same time, and use the PCE to calculate path of the IP network and the optical network. Modules mainly included in the controller are shown in FIG. 4.

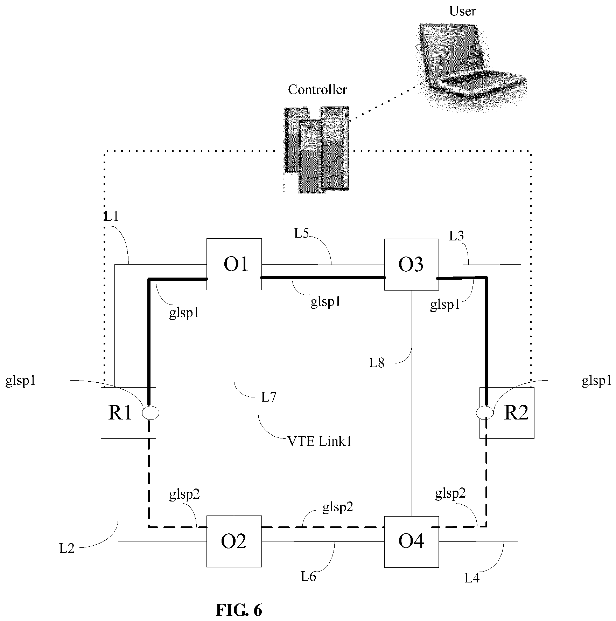

Before performing bandwidth adjustment on demand, some pre-operations may be performed. As shown in FIG. 6, a VTE Link1 (VTE link) needs to be designed between R1 and R2, corresponding to the gLSP bundle1 interface on the R1 and R2 devices.

The bandwidth of the VTE link is specified to be 8G. The stateful PCE module calculates the path glsp1 of R1->L1->O1->L5->O3->L3->R2, which meet the demand, and notifies the glsp1 to the gLSP bundling module. The gLSP bundling module bundles glsp1 to the VTE Link1 and notifies the VNTM module to control establishment of a forwarding channel of glsp1 between UNI-C devices.

After completing pre-configuration, the optical network can provide a transmission service of 8G to the IP network. In the IP network topology, R1 and R2 are directly connected through VTE Link1, that is, specific devices of the optical network are not visible.

With increasing enabled services of the multi-layer network, the IP network will impose additional demand for service bandwidth on the optical network. When the additional demand for bandwidth is less than 2G, remaining bandwidth on the path of glsp1 may meet the new demand for bandwidth, and the controller may directly expand the bandwidth of glsp1 by using Make Before Break (MBB).

However, if the IP network imposes a new demand for bandwidth of 5G on the optical network, the remaining bandwidth of the original path of glsp1 may not meet the new demand for bandwidth. At this time, the stateful PCE module needs to recalculate a path, which is glsp2 (R1->L2->O2->L6->O4->L4) in FIG. 6. The stateful PCE module notifies the newly calculated path glsp2 to the gLSP bundling module. The gLSP bundling module bundles glsp2 to VTE Link1 and notifies the VNTM module to establish a glsp2 forwarding channel between the UNI-C devices.

After the operation is completed, VTE Link1 may provide a transmission capacity of 13G to the IP network through glsp1 and glsp2. If subsequent network services are reduced, the service bandwidth to be provided by the optical network is reduced to 8G.

It should be noted that, in the present disclosure, if the demand for bandwidth is reduced and the bandwidth of gLSP for the VTE link meets the bandwidth to be reduced, the gLSP may be directly removed from the VTE Link, or the bandwidth of the gLSP may be adjusted to meet the demand for reduced bandwidth of the VTE Link. That is, in the present disclosure, there are two processing manners after the gLSP bundling: one is to unbundle glsp2 and VTE Link1 and delete glsp2, and the other is to reduce the bandwidth of glsp1 to 3G.

The operations described above, whether increasing bandwidth of the VTE Link or reducing bandwidth of the VTE Link, would not change the topology of the IP network. From the perspective of the IP network, there is still one VTE Link1 between R1 and R2, with changes to the bandwidth of the VTE Link1. There is no new connection between R1 and R2, routing convergence is not needed, and there is no impact on existing IP services.

Additionally, an embodiment of the present disclosure further provides a computer readable storage medium storing computer executable instructions, when implemented by the processor, causing implementation of the method for adjusting bandwidth on demand.

Optionally, in this embodiment, the above storage medium may include, but not limited to, a USB flash drive, a Read-Only Memory (ROM), a Random Access Memory (RAM), a mobile hard disk, a magnetic disk or compact disc, and other medium that can store program code.

Optionally, in this embodiment, the processor performs a step of the method of the above embodiments according to the stored program code in the storage medium.

Optionally, specific examples in this embodiment may refer to the examples described in the above embodiments and the optional embodiments, and details thereof will not be described herein again.

One of ordinary skill in the art will appreciate that all or a part of the above steps may be performed by instructing related hardware, such as a processor, by a program which may be stored in a computer readable storage medium, such as a read only memory, a disk or an optical disk. Alternatively, all or a part of the steps of the above embodiments may also be implemented using one or more integrated circuits. Accordingly, each module/unit in the above embodiment may be implemented in a form of hardware, for example, implementing corresponding function by a integrated circuit, or may be implemented in a form of a function module in software, for example, implementing corresponding function by executing a program/instructions stored in a memory by a processor. This application is not limited to any specific combination of hardware and software.

Basic principles, main features of the present disclosure and advantages of the present disclosure are illustrated and described above. The present disclosure is not limited to the above embodiments, and the above embodiments and description are merely for explaining the principles of the present disclosure. Various changes and improvements may be made to the present disclosure without departing from the scope of this application, and the changes and improvements are within the claimed scope of the disclosure.

### Industrial applicability

According to a technical solution of embodiments of the present disclosure, in the multi-layer network based on SDN architecture, when the service layer is required to provide a service demanding additional bandwidth, the network topology of the client layer would not change, and thus a service of the client layer would not be affected; additionally, adjustment to the bandwidth can be of various granularities according to a demand of a user, and is not limited by a bandwidth of a single physical link between UNI-C and UNI-N.

## Claims

1. A method for adjusting bandwidth on demand, comprising:
bundling different generalized Label Switched Paths, gLSPs, between user network interface-client devices, UNI-C devices, to a same VTE link between the UNI-C devices; and
performing, when there is an additional bandwidth demand for a generalized Label Switched Path in the VTE link, bandwidth expansion on the generalized Label Switched Path or adding for the VTE link a generalized Label Switched Path satisfying the bandwidth demand.

2. The method of claim 1, wherein after the bundling the different generalized Label Switched Paths LSPs between the UNI-C devices to the same VTE link between the UNI-C devices, further comprises:
gathering traffic engineering TE information of all of the generalized Label Switched Paths for the VTE link and notifying the gathered TE information to an IP layer, such that the IP layer performs path calculation based on the gathered TE information.

3. The method of claim 1, wherein after the bundling the different generalized Label Switched Paths LSPs between the UNI-C devices to the same VTE link between the UNI-C devices, further comprises one of:
making all of the generalized Label Switched Paths for the VTE link correspond to a same TE link between the UNI-C devices and a user network interface-network device, UNI-N device;
making all of the generalized Label Switched Paths for the VTE link correspond to different TE links between the UNI-C devices and the UNI-N device; and
making the generalized Label Switched Paths for different VTE links correspond to a same TE link between the UNI-C devices and the UNI-N device.

4. The method of claim 1, wherein before the bundling the different generalized Label Switched Paths LSPs between the UNI-C devices to the same VTE link between the UNI-C devices, further comprises:
verifying whether there is a VTE link between the UNI-C devices, and determining whether the VTE link is able of providing a service; and
establishing a VTE link between the UNI-C devices when there is no VTE link or the VTE link is not able of providing a service.

5. The method of claim 1 or 4, wherein before the bundling the different generalized Label Switched Paths LSPs between the UNI-C devices to the same VTE link between the UNI-C devices, further comprises:
configuring both ends of the VTE link as LSP bundling interfaces of the UNI-C devices, and configuring a virtual connection between the LSP bundling interfaces of the UNI-C devices as corresponding to the VTE link.

6. The method of claim 1, wherein after the adding for the VTE link the generalized Label Switched Path satisfying the bandwidth demand, further comprises:
bundling the added generalized Label Switched Path to the VTE link.

7. The method of claim 6, after the bundling the added generalized Label Switched Path to the VTE link, further comprises:
updating TE information of all of the generalized Label Switched Paths for the VTE link and notifying the TE information to the IP layer.

8. A device for adjusting bandwidth on demand, comprising:
an LSP bundling module configured to bundle different generalized Label Switched Paths, gLSPs, between user network interface-client devices, UNI-C devices, to a same VTE link between the UNI-C devices; and
a stateful PCE module configured to perform, when there is an additional bandwidth demand for a generalized Label Switched Path in the VTE link, bandwidth expansion on the generalized Label Switched Path or add for the VTE link a generalized Label Switched Path satisfying the bandwidth demand.

9. The device of claim 8, further comprising:
a virtual network topology management VNTM module configured to gather traffic engineering TE information of all of the generalized Label Switched Paths for the VTE link and notify the gathered TE information to an IP layer, such that the IP layer performs path calculation based on the gathered TE information.

10. The device of claim 9, wherein the VNTM module is configured to perform one of:
making all of the generalized Label Switched Paths for the VTE link correspond to a same TE link between the UNI-C devices and a user network interface-network device, UNI-N device;
making all of the generalized Label Switched Paths for the VTE link correspond to different TE links between the UNI-C devices and the UNI-N device; and
making the generalized Label Switched Paths for different VTE links correspond to a same TE link between the UNI-C devices and the UNI-N device.

11. The device of claim 8, wherein the stateful PCE module is further configured to:
verify whether there is a VTE link between the UNI-C devices, and determine whether the VTE link is able of providing a service; and
establish a VTE link between the UNI-C devices when there is no VTE link or the VTE link is not able of providing a service.

12. The device of claim 8 or 11, wherein the stateful PCE module is further configured to:
configure both ends of the VTE link as LSP bundling interfaces of the UNI-C devices, and configure a virtual connection between the LSP bundling interfaces of the UNI-C devices as corresponding to the VTE link.

13. The device of claim 8 or 9, wherein
the stateful PCE module is further configured to notify the LSP bundling module after the generalized Label Switched Path satisfying the bandwidth demand is added for the VTE link; and
the LSP bundling module is further configured to bundle the added generalized Label Switched Path to the VTE link.

14. The device of claim 13, wherein
the LSP bundling module is further configured to notify the VNTM module after the added generalized Label Switched Path is bundled to the VTE link; and
the VNTM module is configured to update TE information of all of the generalized Label Switched Paths for the VTE link and notify the TE information to the IP layer.

15. A device for adjusting bandwidth on demand, comprising: a processor and a memory storing computer executable instructions, when implemented by the processor, causing implementation of a method of:
bundling different generalized Label Switched Paths, gLSPs, between user network interface-client devices, UNI-C devices, to a same VTE link between the UNI-C devices; and
performing, when there is an additional bandwidth demand for a generalized Label Switched Path in the VTE link, bandwidth expansion on the generalized Label Switched Path or adding for the VTE link a generalized Label Switched Path satisfying the bandwidth demand.

16. A computer storage medium storing thereon computer executable instructions, which is configured to perform the method for adjusting bandwidth on demand according to any of claims 1-7.
